# EUROPÄISCHE PATENTSCHRIFT

(11) **EP 4 436 802 B1**
(45) Veröffentlichungstag und Bekanntmachung des Hinweises auf die Patenterteilung: **20.08.2025**
(21) Anmeldenummer: 22817082.5
(22) Anmeldetag: 21.11.2022
(51) Int. Cl.: B60C 25/05, B60C 25/138, B25J 15/00

(54) **VERFAHREN ZUR MONTAGE EINES LUFTREIFENS AUF EINER FELGE**
PROCESS FOR MOUNTING A PNEUMATIC TIRE ON A RIM
PROCEDE POUR LE MONTAGE D'UN PNEUMATIQUE SUR UNE JANTE

(30) Priorität: 24.11.2021 DE 102021130854
(43) Veröffentlichungstag der Anmeldung: 02.10.2024
(73) Patentinhaber: Schenck RoTec GmbH, 64293 Darmstadt (DE)
(72) Erfinder: PEINELT, Andreas, 64319 Pfungstadt (DE); ORTWEIN, Mark, 64289 Darmstadt (DE); ROGALLA, Martin, 64297 Darmstadt (DE); BEILSTEIN, Philip, 64686 Lautertal (DE); JUNG, Alexander, 64295 Darmstadt (DE)
(74) Vertreter: Haarpatent Patentanwälte Krämer Meyer
(86) Internationale Anmeldenummer: PCT/DE2022/100867
(87) Internationale Veröffentlichungsnummer: WO 2023/093938

(56) Entgegenhaltungen:
- EP-A1- 1 916 124
- EP-A1- 1 927 483
- EP-A1- 2 388 155
- EP-A2- 1 738 937
- DE-A1- 102005 001 212
- DE-A1- 102005 030 692
- DE-B3- 102011 002 180
- DE-U1- 202018 106 191
- US-A1- 2008 066 873

## Beschreibung

Die Erfindung betrifft ein Verfahren zur Montage eines Luftreifens auf einer Felge mithilfe eines Handhabungsroboters, der den Luftreifen während der Montage führt. Ferner ist eine Vorrichtung zur Durchführung des Verfahrens beschrieben.

Bei der industriellen Herstellung von Fahrzeugrädern werden zunächst die zusammengehörenden Felgen und Reifen getrennt herangeführt und nachfolgend in verschiedenen Fertigungsstationen nacheinander bis zum fertigen Komplettrad bearbeitet. Hierbei müssen die Felgen und Reifen typenmäßig erfasst, geseift und montiert werden. Anschließend werden die montierten Räder meist automatisch mit einem Luftdruck befüllt und ausgewuchtet, um dann am Auto befestigt werden zu können. Eine derartige Räderfertigung unterliegt einer hohen Qualitätskontrolle, da ein schlecht gefertigtes Fahrzeugrad insbesondere bei hohen Geschwindigkeiten ein Sicherheitsrisiko darstellt und das Fahrverhalten eines Fahrzeuges stark beeinflussen kann. Da die einzelnen Fertigungsstufen zum Teil voneinander abhängen, könnte ein Fehler in einer Vorstufe zum Überschreiten geforderter Qualitätstoleranzen beim fertigen Rad führen, so dass dann dieses nicht mehr verwendbar ist. Jede Fertigungsstation in dieser Herstellungslinie wird deshalb so ausgeführt, dass die dort zulässige Fertigungstoleranz möglichst eingehalten wird.

Bei einem Verfahren zum maschinellen Montieren von Fahrzeugrädern wird die Felge mit der Felgenschüssel nach oben oder unten in einer horizontalen Lage mittels einer Spannvorrichtung festgehalten. Der Luftreifen wird schräg auf die Felge aufgelegt und soweit an die Felge herangeschoben, dass der untere Reifenwulst mit einem unteren Abschnitt in das Tiefbett der Felge gedrückt wird, während er mit seinem oberen Abschnitt über das obere Felgenhorn hinausragt. Anschließend werden von oben Aufziehwerkzeuge auf den Reifen und die Felge abgesenkt, welche die Reifenseitenwand nach unten in die Höhe des Tiefbetts der Felge drücken. Durch Rotation der Aufziehwerkzeuge um die Drehachse der Felge wird dann der Reifenwulst kontinuierlich über das obere Felgenhorn gezogen.

US 5 170 828 A offenbart ein Verfahren zur Montage eines Luftreifens auf eine Tiefbettfelge. Nach diesem Verfahren wird der Luftreifen mittels einer Fördereinrichtung von oben auf eine in einer Spannvorrichtung gehaltene Felge aufgelegt und dann gemeinsam mit der Felge in eine Montage- und Füllstation gefördert. Dort wird der Reifen mittels einer Füllglocke, die von einer Handhabungseinrichtung bewegt wird und auf die Reifenwülste einwirkt, über die Felge gestreift und dann mit Hilfe der Füllglocke aufgepumpt.

Aus US 4,621,671 A ist eine Anlage zur Montage von Luftreifen auf Tiefbettfelgen bekannt, bei der die Felgen auf Paletten in vorgegebenem Abstand längs einer Förderstraße zu zwei hintereinanderliegenden Reifenmontagevorrichtungen gefördert werden.

Es ist weiterhin aus WO99/42309 A1 eine Vorrichtung zur Montage eines Luftreifens auf eine Felge bekannt, welche einen Roboter mit einem in drei Richtungen beweglichen Gelenkarm umfasst, der entlang einer Bewegungsbahn bewegbar ist, die aus einer Vielzahl von programmierbaren, vorbestimmten und im Speicher einer Zentraleinheit abgelegten Bewegungsbahnen auswählbar ist.

Aus DE 10 2006 0571 71 A1 ist eine Vorrichtung zur Montage eines Luftreifens auf eine Felge eines Fahrzeugrades mit einem Handhabungsroboter bekannt, der eine um mehrere Achsen bewegbare Roboterhand mit einem drehend antreibbaren Flansch und einen an der Roboterhand angebrachten Greifer aufweist, der einen Grundkörper und radial zur Mittelachse des Greifers bewegbare Greiferarme hat, die mit einer Synchronisiereinrichtung gekoppelt sind, welche die radiale Bewegung der Greiferarme synchronisiert. Die Synchronisiereinrichtung weist eine an dem Grundkörper drehbar gelagerte, durch einen Motor drehend antreibbare Scheibe und Kuppelglieder auf, die mittels Gelenken an der Scheibe und den Greiferarmen derart befestigt sind und bei Drehung der Scheibe eine synchrone, radiale Bewegung der Greiferarme bewirken.

DE 10 2005 030 692 A1 offenbart einen Handhabungsroboter zur automatischen Montage von Luftreifen auf Felgen. Die Handhabung und Montage der Luftreifen erfolgt mit Hilfe eines Greifers, der an dem Schwenkarm oder der Roboterhand des Handhabungsroboters angebracht ist und der die Luftreifen in geeigneter Weise greifen und halten kann. Die Luftreifen werden vom Greifer am Außenumfang im Bereich der Lauffläche gegriffen. Außerdem werden die Greiferfinger oder -arme, die den Luftreifen umgreifen, synchron zueinander und auseinander bewegt, damit die gegriffenen Luftreifen immer in eine definierte Mittellage in Bezug auf den Greifer und damit auch in Bezug auf die Roboterhand gelangen.

Aus DE 20 2018 106 191 ist eine Vorrichtung zum Greifen und Halten eines Reifens an dessen Außenumfang bekannt, umfassend eine Handhabungsvorrichtung, mit einem in mehrere Raumrichtungen bewegbaren Gelenkarm, der an seinem freien Ende einen Greifer mit zwei Greiferarmen aufweist. Die mehrgliedrigen Greiferarme bestehen aus Segmenten, die über Synchronisierungsmittel derart miteinander in Wirkkontakt stehen, dass die Bewegung eines Greifersegmentes zur Bewegung eines weiteren Greifersegmentes führt und die Greifbewegung der Greiferarme in einer zur Reifenachse quer liegenden Ebene erfolgt, so dass die Greifersegmente mit ihren Kontaktflächen in Kontakt mit dem Außenumfang des Reifens bringbar sind. Somit sind Reifen mit verschiedenen Außendurchmessern am Außenumfang greifbar, ohne hierbei die Seitenflächen der Reifen für eine weitere Bearbeitung zu blockieren, wobei sich die Greiferarme, beziehungsweise deren Greifersegmente synchronisiert radial bewegen.

WO 2008/063212 A2 beschreibt eine Reifenmontageanlage, bei der mehrere Roboter zusammenarbeiten und definierte Aufgaben übernehmen, so dass beispielsweise ein Felgenroboter die Felge zu einer Seifstation bewegt und nach dem Seifen ablegt, während ein Reifenroboter den gleichen Vorgang mit dem Reifen ausführt. Ein Montageroboter dient der Montage des Rades, bei der Reifen und Felge montiert werden.

Aus DE 10 2011 002 180 B3 ist ein Verfahren zur Montage eines Luftreifens auf eine Tiefbettfelge bekannt. Hierbei wird der Luftreifen mittels eines an einer Handhabungseinrichtung angeordneten Greifers an der Lauffläche erfasst und durch eine kontrollierte Bewegung des Greifers mit dem ersten Reifenwulst über die Felge gestreift. Der Greifer wird dann von dem Luftreifen gelöst wird und der Reifen mittels Stellgliedern in eine Ausgangsposition für die Montage des zweiten Reifenwulstes bewegt. Durch eine Drehbewegung des Greifers um die Achse der Felge werden an dem Greifer angeordneten Montagewerkzeuge an der Felge entlanggeführt, wodurch der zweite Reifenwulst über die Felge gestreift wird.

EP 2 388 155 A1 beschreibt eine Vorrichtung zur Änderung der Drehwinkellage eines Luftreifens gegenüber einer Felge. Eine Handhabungseinrichtung mit einem durch einen positionierbaren Drehantrieb drehbaren Greifer kann ein Rad zu einer Spannvorrichtung fördern, wobei nach Abdrücken der Reifenwülste von der festgespannten Felge der Luftreifen gegenüber der Felge um einen berechneten Differenzdrehwinkel gedreht werden kann.

DE 10 2005 001 212 A1 offenbart ein Verfahren zur Montage eines Luftreifens auf eine Tiefbettfelge eines Fahrzeugrades bei dem der Luftreifen in einer Spannvorrichtung aufgenommen und durch Verstellen der Spannvorrichtung in eine ovale Form gedrückt wird.

Problematisch bei den bekannten Vorrichtungen ist, dass mehrere Montagestationen mit mehreren Handhabungsvorrichtungen notwendig sind, was insbesondere kostenintensiv ist und die Wartung der Anlagen kompliziert gestaltet.

Der Erfindung liegt die Aufgabe zugrunde, ein Verfahren zur automatischen Montage von Luftreifen anzugeben, bei dem die Anzahl der Handhabungsvorrichtungen ohne negative Beeinflussung der Automatisierung reduziert ist.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass ein Verfahren zur Montage eines Luftreifens auf eine Tiefbettfelge eines Fahrzeugrades bereitgestellt wird, bei welchem der Luftreifen in einer Bereitstellungsposition mittels eines an einem in drei Richtungen bewegbaren Gelenkarm eines Handhabungsroboters angeordneten Greifers an der Lauffläche erfasst, der Reifen an die in einer Spannvorrichtung gehaltene Felge herangeführt und durch eine kontrollierte Bewegung des den Luftreifen haltenden Greifers mit dem der Felge zugekehrten ersten Reifenwulst über ein Felgenhorn der Felge gestreift wird,
dass die Montage des zweiten Reifenwulstes mit Hilfe einer Montagewerkzeug aufweisenden Handhabungseinrichtung erfolgt, die während der Bewegung des Handhabungsroboters insbesondere entlang einer Kreisbahn das Montagewerkzeug entlang einer Kreisbahn an dem Felgenhorn führt und hierdurch der zweite Reifenwulst vollständig über das Felgenhorn gestülpt wird, wobei die Bewegung des Handhabungsroboters zu der der Handhabungseinrichtung koordiniert erfolgt. Der Handhabungsroboter kann eine vorgegebene oder frei programmierbare Positionierung und Bewegung des Reifens ausführen, wobei diese Positionierung und Bewegung insbesondere bei der Montage des zweiten Reifenwulstes auf die Bewegung der Handhabungseinrichtung mit dem Montagewerkzeug abgestimmt ist, sodass die Bewegungen koordiniert erfolgen. So kann beispielsweise der von dem Handhabungsroboter gehaltene Reifen derart geneigt werden, dass sich die von dem Montagewerkzeug der Handhabungseinrichtung unternommene Aufgabe oder Tätigkeit einfacher, bzw. leichter gestaltet und schneller, sicherer und effizienter ausführbar ist.

Das erfindungsgemäße Verfahren hat mitunter den Vorteil, dass aufgrund der koordinierten Bewegung des Handhabungsroboters und der Handhabungseinrichtung zahlreiche Werkzeuge entfallen und die Montage, sprich die Handhabung des Reifens im Grunde durch einen einzigen Handhabungsroboter erfolgen kann. Das heißt, der Handhabungsroboter übernimmt die Rolle aller Reifenmontagewerkzeuge aus der klassischen Montagemaschine, so dass Werkzeuge wie beispielsweise Reifenheber vorn/hinten, Reifenschieber und Niederhalter entfallen und eine einfache Montageanlage bereitgestellt wird. Vorteilhafterweise übernimmt der Handhabungsroboter somit die Funktion aller nicht am Montagekopf befindlichen Reifenmanipulationswerkzeuge. Vorallem wird der Reifen während des ganzen Montagevorgangs von dem Handhabungsroboter an seiner Lauffläche gehalten. Dies ermöglicht große Fördergeschwindigkeiten und dementsprechend kurze Taktzeiten und vermeidet Fehlpositionieren des Reifens bei der Übergabe von einer Fördereinrichtung an die nächste. Auch die Erweiterung der Montageanlage ist problemlos möglich, da weitere Station ergänzt werden können.

Für bestimmte Reifentypen kann es vorteilhaft sein, wenn der Luftreifen vor der Montage mit einem Gleitmittel benetzt wird, um die Montage zu vereinfachen. Diesbezüglich kann es vorteilhaft sein, wenn ein bereits mit Gleitmittel benetzter Luftreifen insbesondere in einer Bereitstellungsposition bereitgestellt wird und von dem am Gelenkarm des Handhabungsroboters angeordneten Greifer an der Lauffläche erfasst und an die in einer Spannvorrichtung gehaltene Felge herangeführt und durch eine kontrollierte Bewegung des den Luftreifen haltenden Greifers mit dem der Felge zugekehrten ersten Reifenwulst über ein Felgenhorn der Felge gestreift wird, dass die Montage des zweiten Reifenwulstes mit Hilfe einer Montagewerkzeug aufweisenden Handhabungseinrichtung erfolgt, die während der Bewegung des Handhabungsroboters insbesondere entlang einer Kreisbahn das Montagewerkzeug entlang einer Kreisbahn an dem Felgenhorn führt und hierdurch der zweite Reifenwulst vollständig über das Felgenhorn gestülpt wird, wobei die Bewegung des Handhabungsroboters zu der der Handhabungseinrichtung koordiniert erfolgt.

Es kann ferner bevorzugt sein, dass auch das Seifen des Luftreifens, insbesondere dessen Felgenwulst von dem Handhabungsroboter ausgeführt wird und zwar nachdem der Handhabungsroboter den Luftreifen aus der Bereitstellungsposition entnommen und bevor der mit Gleitmittel benetzte Luftreifen an die Spannvorrichtung herangeführt wird. Es ist somit ein Verfahren zur Montage eines Luftreifens auf eine Tiefbettfelge eines Fahrzeugrades bevorzugt, bei welchem der Luftreifen in einer Bereitstellungsposition mittels eines an einem in drei Richtungen bewegbaren Gelenkarm eines Handhabungsroboters angeordneten Greifers an der Lauffläche erfasst,
von dem Handhabungsroboter in eine Benetzungsstation zum Benetzen der Reifenwülste mit Gleitmittel gefördert und in der Benetzungsstation mit den Reifenwülsten an einer Auftragseinrichtung für das Gleitmittel entlang bewegt wird,
der mit Gleitmittel benetzte Reifen danach vom Handhabungsroboter an die in einer Spannvorrichtung gehaltene Felge herangeführt und durch eine kontrollierte Bewegung des den Luftreifen haltenden Greifers mit dem der Felge zugekehrten ersten Reifenwulst über ein Felgenhorn der Felge gestreift wird,
dass die Montage des zweiten Reifenwulstes mit Hilfe einer Montagewerkzeug aufweisenden Handhabungseinrichtung erfolgt, die während der Bewegung des Handhabungsroboters insbesondere entlang einer Kreisbahn das Montagewerkzeug entlang einer Kreisbahn an dem Felgenhorn führt und hierdurch der zweite Reifenwulst vollständig über das Felgenhorn gestülpt wird, wobei die Bewegung des Handhabungsroboters zu der der Handhabungseinrichtung koordiniert erfolgt. Durch das erfindungsgemäße Verfahren ist es möglich, weitere Verfahrensschritte, die zuvor von separaten Handhabungsvorrichtungen oder manuell durchgeführt wurden, von dem Handhabungsroboter auszuführen und in das Verfahren zu integrieren. Die Reifenmontageanlagen werden somit einfacher gestaltet, die Kosten und der Wartungsaufwand werden reduziert und die Taktzeiten können erniedrigt werden.

In einer Ausgestaltung ist vorgesehen, dass der Luftreifen von dem Handhabungsroboter zur Montage des ersten Reifenwulstes in einer zur Felge geneigten Lage, in welcher die Rotationsachse des Luftreifens einen Winkel mit der Rotationsachse der Felge bildet, auf die Felge derart aufgesetzt wird, dass ein Abschnitt des Felgenhorns in die Öffnung des ersten Reifenwulstes eindringt und der Reifenwulst im Bereich dieses Abschnitts des Felgenhorns an einer Stelle des Tiefbetts der Felge zur Anlage kommt und dass anschließend durch Verringerung der Neigung des Luftreifens gegenüber der Felge der Reifenwulst über das Felgenhorn gestreift wird. Hierdurch ist eine einfache Montage des ersten Wulstes mit ausschließlich dem Handhabungsroboter möglich, was mit geringeren Kosten sowie geringeren Taktzeiten assoziiert ist.

Es ist bevorzugt, dass die Montage des ersten Reifenwulstes mit Hilfe einer Montagewerkzeug aufweisenden Handhabungseinrichtung erfolgt, deren Bewegung zu der des Handhabungsroboters koordiniert ist, so dass während der Bewegung des Handhabungsroboters das Montagewerkzeug entlang einer Kreisbahn an dem Felgenhorn geführt und hierdurch der erste Reifenwulst vollständig über das Felgenhorn gestülpt wird. Für bestimmte Reifentypen ist es vorteilhaft, Montagewerkzeug für die Montage des ersten Wulstes heranzuziehen. Jedoch kann dieser Schritt auch durch eine koordinierte Bewegung des Handhabungsroboters und des Montagekopfes erfolgen. Hierbei hat es sich als vorteilhaft gezeigt, wenn die Neigung des Luftreifens durch den Handhabungsroboter ebenfalls entlang einer Kreisbahn erfolgt, wobei diese Kreisbahn einen größeren Radius aufweist als die des Montagekopfes bzw. des Montagewerkzeuges. Hierdurch wandern das Montagewerkzeug und die Neigung des Luftreifens, insbesondere der tiefste Punkt des Luftreifens synchron auf ihren Kreisbahnen und befinden sich radial zur Längsachse der Felge hintereinander. Das Montagewerkzeug und die Neigung des Luftreifens, insbesondere der tiefste Punkt des Luftreifens liegen also vorteilhafterweise auf ihren Kreisbahnen radial hintereinander.

Es kann vorteilhaft sein, wenn die Auftragseinrichtung eine stabförmig ausgebildete, feststehende und mit Gleitmittel benetzbare Bürstvorrichtung umfasst und der Handhabungsroboter den Reifen um die Bürstvorrichtung herumschwenkt. Die Auftragung des Gleitmittels mithilfe einer Bürste, um die der Luftreifen geschwenkt wird, hat sich als effiziente und kostengünstige Benetzungsmethode herausgestellt.

Nach einem weiteren Vorschlag der Erfindung kann vorgesehen sein, dass der Luftreifen bei der Montage von dem Montageroboter oder der Handhabungseinrichtung derart verformt wird, dass der zu montierende Reifenwulst eine ovale Form annimmt. Um dies zu ermöglichen, kann der den Luftreifen haltenden Greifer derart gesteuert sein, dass der Greifer eine definierte asynchrone Spannbewegung ausführt. Alternativ kann die ovale Form des Luftreifens durch eine radiale Bewegung des Montagekopfes, insbesondere dessen Werkzeug erreichbar sein.

Eine Vorrichtung zur Durchführung des Verfahrens umfasst einen Handhabungsroboter mit einem in drei Richtungen bewegbaren Gelenkarm, der an seinem freien Ende einen Greifer zum Greifen und Halten von Luftreifen trägt und mit einer Montagestation mit einer Spannvorrichtung zum lösbaren Halten einer Felge, die eine Handhabungseinrichtung mit einem Montagekopf umfasst, der mit zwischen Reifenwulst und Felgenhorn entlangführbaren Montagewerkzeugen ausgerüstet ist, wobei die Montagestation im Arbeitsbereich des Handhabungsroboters angeordnet ist. Der Handhabungsroboter kann bereits mit Gleitmittel benetzte Luftreifen entgegennehmen. Alternativ kann der Handhabungsroboter den Luftreifen an eine klassische Benetzungsstation heranführen, in der der Luftreifen beispielsweise von Hand mit Gleitmittel benetzt wird. In einer bevorzugten Ausgestaltung ist eine Benetzungsstation mit einer mit Gleitmittel benetzbaren Auftragseinrichtung insbesondere im Arbeitsbereich des Handhabungsroboters vorgesehen, wobei der Handhabungsroboter den zu benetzenden Luftreifen an die Auftragseinrichtung heranführt. Hierbei übernimmt der Handhabungsroboter auch das Seifen des Luftreifens, indem er den Luftreifen von einer Beladestation übernimmt, eine koordinierte Seifbewegung in der Benetzungsstation durchführt und anschließend den benetzten Luftreifen an die in einer Montagestation gehaltene Felge heranführt.

Der Handhabungsroboter, der im Sinne der Erfindung auch als Montageroboter bezeichnet werden kann, umfasst einen in drei Richtungen bewegbaren Gelenkarm, der an seinem freien Ende einen vorzugsweise relativ zum Gelenkarm bewegbaren Greifer zum Greifen und Halten von Luftreifen trägt. Der Greifer ist so gestaltet, dass die Reifen an ihrem Außenumfang gegriffen und durch radiales Spannen kraftschlüssig gehalten werden können. Vorzugsweise wird der Reifen an drei oder mehr am Umfang verteilten Punkten gehalten, die auf der Reifenlauffläche liegen. Die erfindungsgemäße Vorrichtung umfasst eine Montagestation mit einer Spannvorrichtung zum Halten der Felge während der Reifenmontage. Weiterhin kann im Arbeitsbereich des Handhabungsroboters in einer Ausgestaltung eine Benetzungsstation mit einer Auftragseinrichtung, insbesondere einer Bürste, zum Benetzen der Reifenwülste mit einem Gleitmittel angeordnet sein. Vorzugsweise befindet sich die Benetzungsstation unmittelbar am Ende einer Fördereinrichtung zum Zuführen der zu montierenden Reifen. Es kann auch vorgesehen sein, die Benetzungsstation in den Endabschnitt der Förderstrecke der genannten Fördereinrichtung zu integrieren.

Der Handhabungsroboter übernimmt vorteilhafterweise die Aufgabe der üblichen Reifenmontagewerkzeuge, wobei es vorteilhaft sein kann, wenn der Greifer des Handhabungsroboters zumindest einen Niederhalter umfasst, der den oberen Reifenwulst im Wesentlichen auf Höhe des Tiefbetts der Felge drückt.

Um die Steuerung des Handhabungsroboters und der Handhabungseinrichtung, insbesondere des Montagekopfs zu koordinieren bzw. zu synchronisieren, kann eine Synchronisiereinrichtung vorgesehen sein, die beispielsweise jeweils Bestandteil des programmgesteuerten Handhabungsroboters und der Handhabungseinrichtung sein kann und durch eine mit diesen datenaustauschend verbundenen Steuereinheit gesteuert wird. Über die Steuereinheit können relevante Daten wie beispielsweise Reifentypen usw. eingebbar und die erfindungsgemäße Vorrichtung steuerbar sein. Hierfür kann die Steuereinheit Eingabemittel, wie beispielsweise einen Touchscreen aufweisen.

Die Erfindung wird nachfolgend anhand eines Ausführungsbeispiels der Erfindung näher erläutert, das in der Zeichnung dargestellt ist. Es zeigen
- Figur 1: einen Handhabungsroboter mit Luftreifen an der Benetzungsstation,
- Figur 2: einen Handhabungsroboter mit benetztem Luftreifen an der Montagestation,
- Figur 3: eine Montage des ersten Wulstes,
- Figuren 4-6: eine Montage des ersten Wulstes mit Hilfe des Montagekopfes,

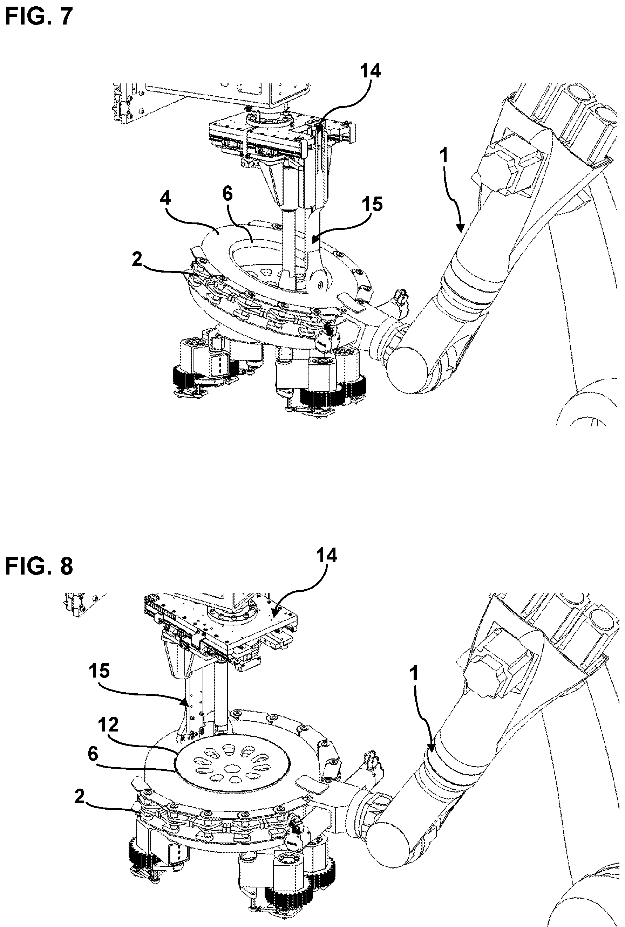

- Figur 7, 8: eine Montage des zweiten Wulstes mit Hilfe des Montagekopfes und

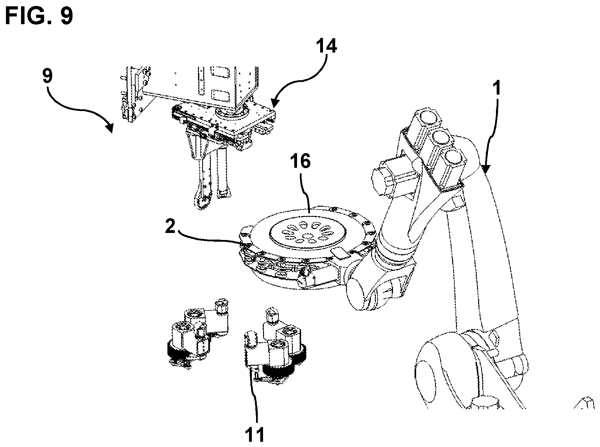

- Figur 9: ein Weitertransport des montierten Rades.

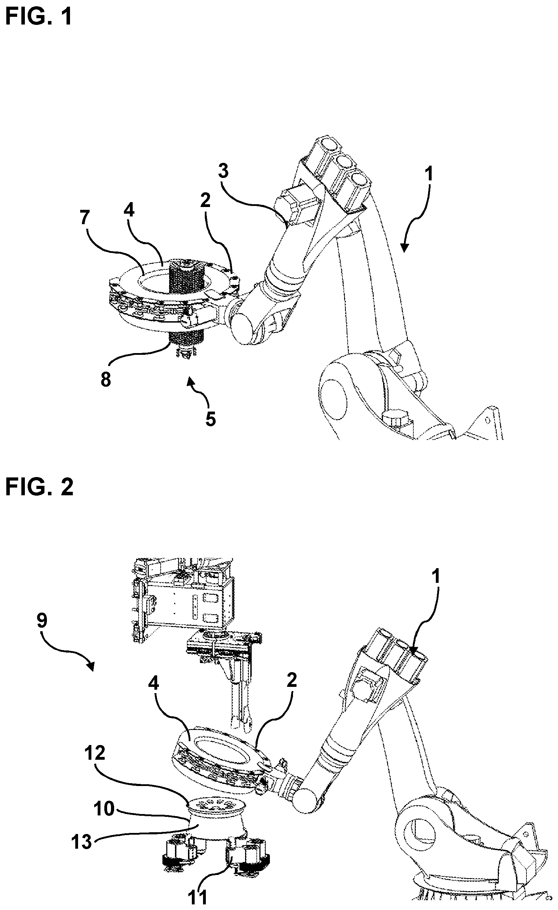

Figur 1 zeigt einen Handhabungsroboter mit Luftreifen an der Benetzungsstation. Der Handhabungsroboter 1 weist einen Greifer 2 auf, der an dem freien Arm eines Industrieroboters angebracht ist, mit einem mehrere Bewegungsachsen aufweisenden Gelenkarm 3, durch den der Greifer 2 in drei Raumrichtungen bewegbar ist. Ein derartiger Greifer 2 ist beispielsweise aus DE 20 2018 106 191 U1 bekannt, deren Inhalt explizit umfasst ist. Das erfindungsgemäße Verfahren ist jedoch nicht auf bestimmte Ausgestaltungen eines Greifers 2 beschränkt. Vielmehr eignen sich für das erfindungsgemäße Verfahren die im Stand der Technik bekannten Greifer, mit deren Hilfe ein Luftreifen an seiner Lauffläche gehalten werden kann. Bevorzugt sind Greifer 3, die eine synchrone Bewegung der Greiferelemente erlauben. Alternativ zu einer synchronen Bewegung der Greiferelemente kann auch eine asynchrone Bewegung vorgesehen sein, wenn z.B. der Reifen durch den Greifer in eine ovale Form gedrückt werden soll. Auch in diesem Fall sollte die Bewegung der Greiferelemente mittenorientiert erfolgen, so dass die Mitte des Reifenovals in der Greifermitte liegt.

Zudem ist der Greifer 2 um zwei Achsen drehbar mit dem Gelenkarm 3 verbunden. Der Handhabungsroboter 1, der im Sinne der Erfindung auch als Montageroboter bezeichnet wird, weist mehrere unabhängige Antriebe auf, die durch eine programmierbare Steuereinrichtung steuerbar sind und eine positionsgenaue Bewegung des Greifers 2 ermöglichen. Der Greifer 2 greift einen zu montierenden Luftreifen 4, z. B. von einer nicht in Figur 1 gezeigten Fördereinrichtung an seinem Außenumfang, wodurch der Luftreifen 4 radial gespannt und kraftschlüssig gehalten wird. Die Fördereinrichtung zur Zuführung des zu montierenden Luftreifens 4 befindet sich vorzugsweise im Arbeitsbereich des Handhabungsroboters 1.

In einer Ausgestaltung kann sich im Arbeitsbereich des Handhabungsroboters 1 eine Benetzungsstation 5 befinden, die zum Benetzen der Reifenwülste, nämlich des unteren und des oberen Wulstes 6, 7 mit einem Gleitmittel vor der Montage dient, um hierdurch den Aufziehvorgang zu erleichtern. Das heißt, in das erfindungsgemäße Verfahren kann ohne Weiteres noch der Prozess des Seifens des Luftreifens 4 als Ausgestaltung einbezogen werden. Auch hier wird der Luftreifen 4 von dem Handhabungsroboter 1 gehalten bzw. bewegt, so dass der Luftreifen 4 während des gesamten Montagevorgangs und zusätzlich dem Seifen von dem Handhabungsroboter 1 an seiner Lauffläche gehalten wird. Alternativ kann der Handhabungsroboter 1 einen geseiften Luftreifen 4, das heißt einen mit Gleitmittel benetzten Luftreifen 4 aus einer Bereitstellungsposition übernehmen und dem weiteren Montageprozess zuführen, wobei das Seifen des Luftreifens 4 mittels klassischer Mittel, wie beispielsweise manuell oder einer separaten Vorrichtung erfolgt.

Die Benetzungsstation 5 umfasst eine Auftragseinrichtung 8 zum Auftragen des Gleitmittels, die beispielsweise als Bürste ausgebildet sein kann. Die Benetzungsstation 5 kann einen Tisch mit einer flachen Wanne umfassen, in deren Mitte die zylindrische, feststehende Bürste angeordnet ist. Alternativ kann als eine Auftragsstation 8 eine Sprühdüse vorgesehen sein. Im Folgenden soll die Aufbringung von Gleitmittel anhand der Bürste als Auftragseinrichtung 8 illustriert werden. Durch eine Zuführleitung im Zentrum der Bürste wird mittels einer unterhalb der Wanne angeordneten Pumpe flüssiges Gleitmittel, beispielsweise Seifenlösung, aus der Wanne zur Oberseite der Bürste gefördert, wodurch die Bürste mit Gleitmittel getränkt wird. Der von dem Greifer 2 an seiner Lauffläche gehaltene Luftreifen 4 wird mit Hilfe des Handhabungsroboters 1 über die Auftragseinrichtung 8, insbesondere die Bürste der Benetzungsstation 5 bewegt und dann so weit abgesenkt, dass die Bürste in die Öffnungen der beiden Reifenwülste 6, 7 eindringt. Bei diesem Vorgang ist der Reifen 4 im Wesentlichen zentrisch zur Bürste ausgerichtet, deren Durchmesser im hier gezeigten Fall kleiner ist als der Innendurchmesser der Wülste 6, 7. Anschließend wird der Luftreifen 4 bewegt, bis die Wülste 6, 7 an einer Stelle die Bürste berühren. Nun werden Luftreifen 4 und Greifer 2 auf einer Kreisbahn um die Achse der Bürste einmal oder mehrmals herumbewegt, wobei die Bürste an den Reifenwülsten 6, 7 entlanggleitet und diese vollständig mit Gleitmittel benetzt. Nach dem Benetzen wird der Luftreifen 4 wieder zur Bürste zentriert und dann nach oben aus der Benetzungsstation 5 entfernt.

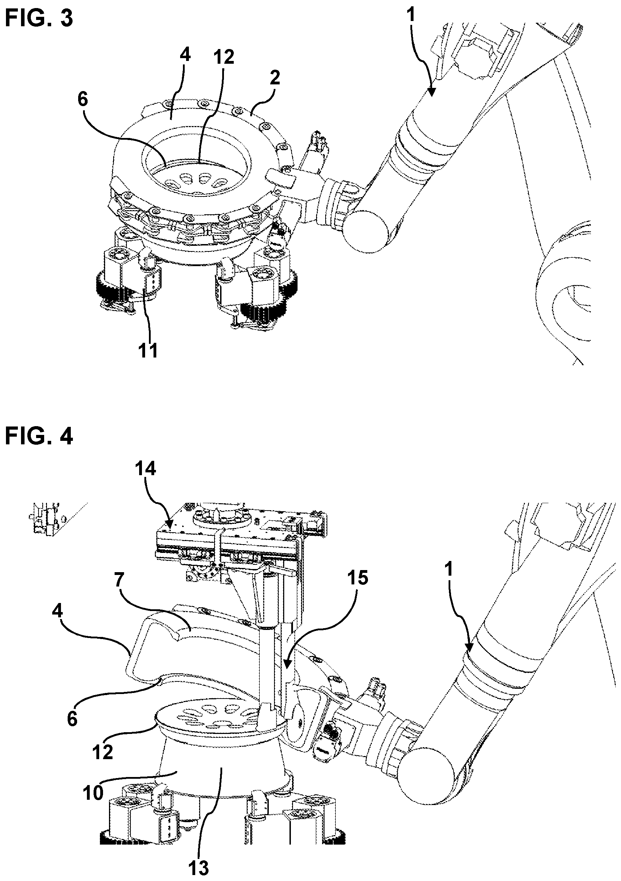

Figur 2 zeigt einen Handhabungsroboter mit benetztem Luftreifen an der Montagestation und Figur 3 die Montage des ersten Wulstes. Im Arbeitsbereich des Handhabungsroboters 1 befindet sich eine Montagestation 9. In der Montagestation 9 wird der mit Gleitmittel benetzte Luftreifen 4 mit Hilfe des Handhabungsroboters 1 auf eine gespannte Felge 10 aufgezogen. Die zum Reifen 4 passende Felge 10 ist mittels einer geeigneten Spannvorrichtung 11 in horizontaler Lage fixiert.

Der Handhabungsroboter 1 bewegt den Luftreifen 4 aus seiner ursprünglich horizontalen Lage in eine gegenüber der horizontalen Lage geneigten Schräglage. Der Luftreifen 4 wird dann auf die Felge 10 abgesenkt und mit der niedrigsten Stelle voran im Wesentlichen in radialer Richtung mit dem unteren Wulst 6 über das obenliegende Felgenhorn 12 gestreift, wobei dieses teilweise in die Öffnung des Reifenwulstes 6 eindringt und der Reifenwulst 6 sich mit seiner tiefsten Stelle an das Tiefbett 13 der Felge 10 anlegt. Ist dieser Zustand erreicht, das heißt, der Luftreifen 4 verringert seine Neigung gegenüber der Felge 10, so wird die radiale Bewegung des Reifens 4 relativ zur Felge 10 beendet und der Reifen 4 um den Berührungspunkt zwischen dem Reifenwulst 6 und dem Tiefbett 13 derart gedreht, dass der Reifen 4 wieder in eine annähernd horizontale Lage gelangt. Hierbei wird der Reifenwulst 6 vollständig über das Felgenhorn 12 gestreift.

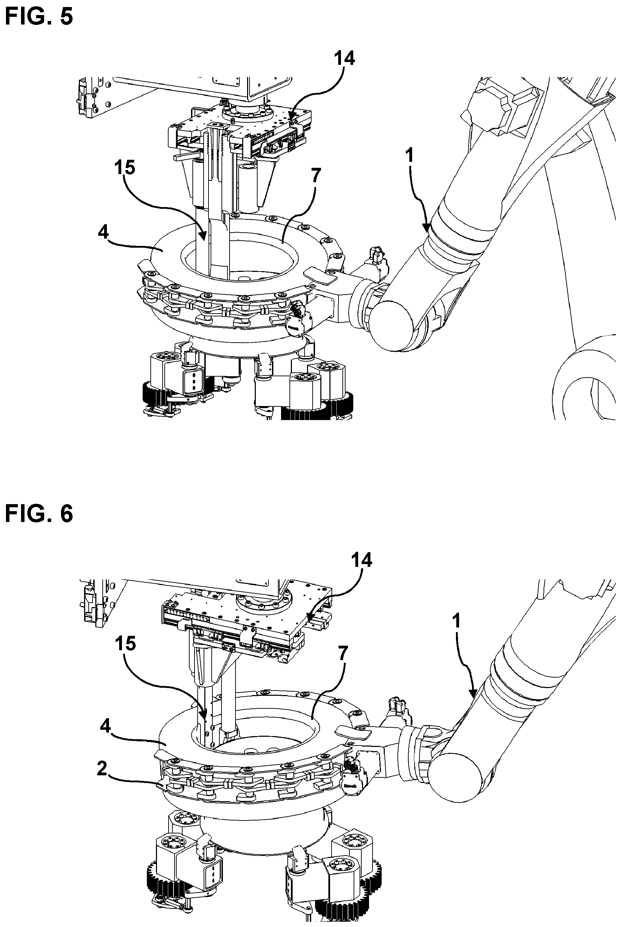

Figuren 4-6 zeigen die Montage des ersten Wulstes mit Hilfe des Montagekopfes. Für bestimmte Luftreifen 4 ist eine Montage mit Montagewerkzeug vorteilhaft und ggf. einfacher. Für eine derartige Reifenmontage kann der erste Wulst 6 nach einer Ausgestaltung mit Hilfe des Montagekopfes 14 montiert. Der Montagekopf 14 ist oberhalb der Felge 10 und insbesondere koaxial zur Achse der Felge 10 angeordnet und kann über eine nicht gezeigte Handhabungseinrichtung in verschiedene Richtungen bewegbar sein. Die Handhabungseinrichtung kann als einfache Montagestation mit linearen Antrieben und Drehantrieben ausgestaltet sein. Es kann jedoch auch vorgesehen sein, dass die Handhabungseinrichtung als Industrieroboter gestaltet ist, an deren freien Ende der Montagekopf mit Werkzeug angeordnet vorliegt.

An dem Montagekopf 14 sind Montagewerkzeuge 15 bewegbar angeordet und umfassen insbesondere einen Wulstabweiser und eine Aufziehrolle. Die Position der Montagewerkzeuge 15 ist in radialer Richtung zwecks Anpassung an unterschiedliche Felgen- und Reifendurchmesser einstellbar. Die Anordnung zusätzlicher Elemente, beispielsweise einer Nachlaufrolle, kann ebenfalls vorgesehen sein. Auch kann es vorteilhaft sein, ein zweites Set Montagewerkzeuge diametral zum ersten anzuordnen.

Zur Einleitung der Montage des ersten Wulstes 6 wird das Werkzeug 15 durch die Öffnung des oberen Wulstes 7 in die Arbeitsposition am Rand der Felge 10 bewegt. Sobald das Werkzeug 15 die in Figur 4 gezeigte Position erreicht hat, wird der Montagekopf 14 im Uhrzeigersinn um die Achse der Felge 10 in Drehung versetzt. Das Werkzeug 15 bewegt sich am Rand der Felge 10 entlang, wobei sein Wulstabweiser den unteren Wulst 6 kontinuierlich über den Rand der Felge 10 streift und die dem Wulstabweiser folgende Andruckrolle den Wulst 6 nach unten zur Mitte der Felge 10 hin drückt. Gleichzeitig neigt der Handhabungsroboter 1 den gehaltenen Luftreifen 4 synchron zur Drehung des Montagekopfes 14. Dadurch, dass der Radius der Kreisbahn des Montagewerkzeuges 15 kleiner als der Radius der Kreisbahn ist, dem die Neigung des Luftreifens 4 folgt, befindet sich der geneigte Luftreifen 4, insbesondere der tiefste Punkt des Luftreifens 4 nahe dem Montagewerkzeug 15, also im Wesentlichen bewegt sich das Montagewerkzeug 15 und die durch den Handhabungsroboter 1 vollzogene Neigung des Luftreifens 4, insbesondere der tiefste Punkt des Luftreifens 4 radial zur Längsachse der Felge 10 und synchron entlang ihrer jeweiligen Kreisbahn. Hierdurch wird die Montage des Luftreifens 4 erheblich vereinfacht. Die Bewegung des Montagekopfes 14 und die des Handhabungsroboters 1 erfolgen aufeinander abgestimmt - beide vollziehen eine synchronisierte Bewegung entlang einer Kreisbahn, wobei der Handhabungsroboter 1 durch die quasi wandernde Neigung des Luftreifens 4 die Tätigkeit des Montagekopfes 14, bzw. dessen Werkzeug 15 unterstützt. Eine entsprechend programmierbare Steuereinheit kann datenaustauschend mit der Steuerung des Montagekopfes 14, bzw. seiner Synchronisiereinrichtung und der Steuerung des Handhabungsroboters 1, bzw. seiner Synchronisiereinrichtung verbunden sein. Die Steuerung des Handhabungsroboters 1 kann anhand der über die Steuereinheit eingegebenen Daten für die Größe und Lage der Felge 10 bzw. des Luftreifens 4 die Bewegung des Greifers 2 mit Luftreifen 4 exakt steuern und auf die Bewegung des Montagekopfes 14 abstimmen. Die Montage des ersten Reifenwulstes 6 ist im Wesentlichen dann beendet, wenn entweder der Montagekopf 14 einen zuvor definierten Punkt auf der Kreisbahn erreicht hat, entsprechende Sensoren die vollständige Montage des ersten Wulstes 6 erfassen oder sich der Luftreifen 4 wieder in einer horizontalen Lage befindet.

Für die Montage des zweiten, oberen Reifenwulstes 7 kann das Montagewerkzeug 15 nach Montage des ersten Reifenwulstes 6 in eine Ausgangsposition gebracht werden, bei der es nahe am Rand der Felge 10 positioniert wird. Durch weiteres Absenken des Montagewerkzeuges 15 wird der zweite Wulst 7 an einem Punkt über das obere Felgenhorn 12 gedrückt und gelangt in Kontakt mit dem Tiefbett 13 der Felge 10. Das Absenken des Montagewerkzeuges 15 wird begleitet von einer Neigung des Luftreifens 4 durch den Greifer 2 des Montageroboters 1. Die Neigung erfolgt nur soweit, dass ein Herausrutschen des unteren Wulstes 6 aus dem Tiefbett 13 der Felge 10 auf der gegenüberliegenden Seite des Reifens 4 verhindert wird. Die Neigung des Reifens 4 erfolgt dann entlang einer Kreisbahn, sowie die Bewegung des Montagekopfes 14, bzw. des Montagewerkzeuges 15 ebenfalls entlang einer Kreisbahn erfolgt. Auch hier sind die Bewegungen des Luftreifens 4, sprich dessen quasi wandernde Neigung und die des Montagekopfes 14, bzw. dessen Werkzeug 15 synchronisiert. Dadurch, dass die Radien der Kreisbahnen unterschiedlich sind, können der tiefste Punkt des Luftreifens 4 und das Werkzeug 15 nahe beieinander geführt werden, so dass beide radial bezugnehmend auf die Längsachse der Felge hintereinanderliegen.

Das Aufziehen des zweiten Reifenwulstes 7 ist erst beendet, wenn das Werkzeug 15 insbesondere nach einer nahezu vollen oder vollen Kreisbewegung seine Ausgangslage wieder erreicht hat. Die Spannvorrichtung 11 gibt anschließend die Felge 10 frei, so dass der Handhabungsroboter 1 das montierte Rad 16 aus Felge 10 und Reifen 4 zu einer nachfolgenden Bearbeitungsstation, beispielsweise einer Reifenfüllstation, weiterfördern kann.

Vorteile des erfindungsgemäßen Verfahrens bzw. der erfindungsgemäßen Vorrichtung sind u. a., dass der Montageroboter 1 den Reifen 4 während der gesamten Montage hält und hierdurch Fehler bei der Reifenübergabe entfallen. Die Montage wird vereinfacht und die Taktzeiten verringern sich.

## Patentansprüche

1. Verfahren zur Montage eines Luftreifens (4) auf eine Tiefbettfelge (10) eines Fahrzeugrades (16), bei welchem der Luftreifen (4) in einer Bereitstellungsposition mittels eines an einem in drei Richtungen bewegbaren Gelenkarm (3) eines Handhabungsroboters (1) angeordneten Greifers (2) an der Lauffläche erfasst,
der Reifen (4) an die in einer Spannvorrichtung (11) gehaltene Felge (10) herangeführt und durch eine kontrollierte Bewegung des den Luftreifen (4) haltenden Greifers (2) mit dem der Felge (10) zugekehrten ersten Reifenwulst (6) über ein Felgenhorn (12) der Felge (10) gestreift wird,
dass die Montage des zweiten Reifenwulstes (7) mit Hilfe einer Montagewerkzeug (15) aufweisenden Handhabungseinrichtung erfolgt, die während der Bewegung des Handhabungsroboters (1) das Montagewerkzeug (15) entlang einer Kreisbahn an dem Felgenhorn (12) führt und hierdurch der zweite Reifenwulst (7) vollständig über das Felgenhorn (12) gestülpt wird, wobei die Bewegung des Handhabungsroboters (1) zu der der Handhabungseinrichtung koordiniert erfolgt und der Luftreifen (4) während des gesamten Montagevorgangs von dem Handhabungsroboter (1) an seiner Lauffläche gehalten wird.

2. Verfahren nach Anspruch 1, **dadurch gekennzeichnet, dass** der Luftreifen von dem Handhabungsroboter (1) in eine Benetzungsstation (5) zum Benetzen der Reifenwülste (6, 7) mit Gleitmittel gefördert und in der Benetzungsstation (5) mit den Reifenwülsten (6, 7) an einer Auftragseinrichtung (8) für das Gleitmittel entlang bewegt wird.

3. Verfahren nach Anspruch 1 oder 2, **dadurch gekennzeichnet, dass** der Luftreifen (4) von dem Handhabungsroboter (1) zur Montage des ersten Reifenwulstes (6) in einer zur Felge (10) geneigten Lage, in welcher die Rotationsachse des Luftreifens (4) einen Winkel mit der Rotationsachse der Felge (10) bildet, auf die Felge (10) derart aufgesetzt wird, dass ein Abschnitt des Felgenhorns (12) in die Öffnung des ersten Reifenwulstes (6) eindringt und der Reifenwulst (6) im Bereich dieses Abschnitts des Felgenhorns (12) an einer Stelle des Tiefbetts (13) der Felge (10) zur Anlage kommt und dass anschließend durch Verringerung der Neigung des Luftreifens (4) gegenüber der Felge (10) der Reifenwulst (6) über das Felgenhorn (12) gestreift wird.

4. Verfahren nach Anspruch 1 oder 2, **dadurch gekennzeichnet, dass** die Montage des ersten Reifenwulstes (6) mit Hilfe einer Montagewerkzeug (15) aufweisenden Handhabungseinrichtung erfolgt, deren Bewegung zu der des Handhabungsroboters (1) koordiniert ist, so dass während der Bewegung des Handhabungsroboters (1) das Montagewerkzeug (15) entlang einer Kreisbahn an dem Felgenhorn (12) geführt und hierdurch der erste Reifenwulst (6) vollständig über das Felgenhorn (12) gestülpt wird.

5. Verfahren nach einem der vorhergehenden Ansprüche, **dadurch gekennzeichnet, dass** die Auftragseinrichtung (8) eine stabförmig ausgebildete, feststehende und mit Gleitmittel benetzbare Bürstvorrichtung umfasst und der Handhabungsroboter (1) den Reifen (4) um die Bürstvorrichtung herum schwenkt.

6. Verfahren nach einem der vorhergehenden Ansprüche, **dadurch gekennzeichnet, dass** der Luftreifen (4) bei der Verringerung seiner Neigung gegenüber der Felge (10) von dem Handhabungsroboter (1) um die Berührungsstelle zwischen dem Tiefbett (13) und dem Reifenwulst (6, 7) gedreht wird.

7. Verfahren nach einem der vorhergehenden Ansprüche, **dadurch gekennzeichnet, dass** der Luftreifen (4) bei der Montage von dem Handhabungsroboter (1) oder der Handhabungseinrichtung derart verformt wird, dass der zu montierende Reifenwulst (6, 7) eine ovale Form annimmt.

8. Verfahren nach einem der vorhergehenden Ansprüche, **dadurch gekennzeichnet, dass** nach Montage des Luftreifens (4) auf der Felge (10) der Handhabungsroboter (1) das montierte Rad (16) an eine das Rad (16) abtransportierende Fördereinrichtung übergibt.

9. Vorrichtung zur Durchführung des Verfahrens nach einem der vorhergehenden Ansprüche 1 bis 8, **gekennzeichnet durch** einen Handhabungsroboter (1) mit einem in drei Richtungen bewegbaren Gelenkarm (3), der an seinem freien Ende einen Greifer (2) zum Greifen und Halten von Luftreifen (4) trägt und mit einer Montagestation (9) mit einer Spannvorrichtung (11) zum lösbaren Halten einer Felge (10), die eine Handhabungseinrichtung mit einem Montagekopf (14) umfasst, der mit zwischen Reifenwulst (6, 7) und Felgenhorn (12) entlangführbaren Montagewerkzeugen (15) ausgerüstet ist, wobei die Montagestation (9) im Arbeitsbereich des Handhabungsroboters (1) angeordnet sind.

10. Vorrichtung nach Anspruch 9, **gekennzeichnet durch** eine im Arbeitsbereich des Handhabungsroboters (1) angeordnete Benetzungsstation (5) mit einer mit Gleitmittel benetzbaren Auftragseinrichtung (8), wobei der Handhabungsroboter (1) den zu benetzenden Luftreifen (4) an die Auftragseinrichtung (8) heranführt.

11. Vorrichtung nach Anspruch 9 oder 10, **dadurch gekennzeichnet, dass** der Greifer (2) des Handhabungsroboters (1) zumindest einen Niederhalter umfasst, der den oberen Reifenwulst (7) im Wesentlichen auf Höhe des Tiefbetts (13) der Felge (12) drückt.

12. Vorrichtung nach einem der vorhergehenden Ansprüche 9 bis 11, **dadurch gekennzeichnet, dass** die Handhabungseinrichtung und der Handhabungsroboter (1) mit einer Synchronisiereinrichtung gekoppelt sind, welche deren Bewegungen synchronisiert.

## Claims

1. Method for mounting a pneumatic tire (4) on a well-base rim (10) of a vehicle wheel (16), in which the pneumatic tire (4) is gripped in a holding position by means of a gripper (2) arranged on a jointed arm (3) of a handling robot (1) which is movable in three directions, the tire (4) is guided toward the rim (10) held in a clamping device ( 11) and, by a controlled movement of the gripper (2) holding the pneumatic tire (4) with the first tire bead (6) facing the rim (10) via a rim flange (12) of the rim (10) in such a way that the second tire bead (7) is mounted with the aid of a handling device comprising an assembly tool ( 15) which, during the movement of the handling robot ( 1), guides the assembly tool (15) along a circular path on the rim flange (12) during the movement of the handling robot (1), thereby completely pulling the second tire bead (7) over the rim flange (12), wherein the movement of the handling robot (1) is coordinated with that of the handling device and the pneumatic tire (4) is held by the handling robot (1) on its tread during the entire assembly process.

2. Method according to claim 1, **characterized in that** the pneumatic tire is conveyed by the handling robot (1) into a wetting station (5) for wetting the tire beads (6, 7) with lubricant and is moved in the wetting station (5) with the tire beads (6, 7) along an application device (8) for the lubricant.

3. Method according to claim 1 or 2, **characterized in that** the pneumatic tire (4) is moved by the handling robot (1) for mounting the first tire bead (6) in a position inclined toward the rim (10) in which the axis of rotation of the pneumatic tire (4) forms an angle with the axis of rotation of the rim (10), onto the rim (10) in such a way that a section of the rim flange (12) penetrates into the opening of the first tire bead (6) and the tire bead (6) comes into contact with the rim flange (12) in the area of this section of the rim flange (12) at a point on the drop center (13) of the rim (10) and that, subsequently, by reducing the inclination of the pneumatic tire (4) relative to the rim (10), the tire bead (6) is stripped over the rim flange (12).

4. Method according to claim 1 or 2, **characterized in that** the first tire bead (6) is mounted with the aid of a handling device comprising an assembly tool (15), the movement of which is coordinated with that of the handling robot (1) so that during the movement of the handling robot (1), the assembly tool (15) is guided along a circular path on the rim flange (12) and the first tire bead (6) is thereby completely placed over the rim flange (12).

5. Method according to one of the preceding claims, **characterized in that** the application device (8) comprises a rod-shaped, stationary brushing device which can be wetted with lubricant, and the handling robot (1) swivels the tyre (4) around the brushing device.

6. Method according to one of the preceding claims, **characterized in that**, when the angle of inclination of the pneumatic tire (4) relative to the rim (10) is reduced, the handling robot (1) rotates the tire about the point of contact between the drop center (13) and the tire bead (6, 7).

7. Method according to one of the preceding claims, **characterized in that** the pneumatic tire (4) is deformed during assembly by the handling robot (1) or the handling device in such a way that the tire bead (6, 7) to be assembled assumes an oval shape.

8. Method according to one of the preceding claims, **characterized in that**, after mounting the pneumatic tire (4) on the rim (10), the handling robot (1) transfers the mounted wheel (16) to a conveyor device that transports the wheel (16) away.

9. Device for carrying out the method according to one of the preceding claims 1 to 8, **characterized by** a handling robot (1) with an jointed arm (3) movable in three directions, which carries a gripper (2) at its free end for gripping and holding pneumatic tires (4) and is equipped with an assembly station (9) with a clamping device (11) for releasably holding a rim (10), which comprises a handling device with an assembly head (14) that can be guided along a tire bead (6, 7) and the rim flange (12), wherein the assembly station (9) is arranged in the working area of the handling robot (1).

10. Device according to claim 9, **characterized by** a wetting station (5) arranged in the working area of the handling robot (1) with an application device (8) that can be wetted with a lubricant, wherein the handling robot (1) moves the pneumatic tire (4) to be wetted toward the application device (8).

11. Device according to claim 9 or 10, **characterized in that** the gripper (2) of the handling robot (1) comprises at least one hold-down device which presses the upper tire bead (7) substantially at the level of the drop center (13) of the rim flange (12).

12. Device according to one of the preceding claims 9 to 11, **characterized in that** the handling device and the handling robot (1) are coupled to a synchronization device which synchronizes their movements.

## Revendications

1. Procédé pour le montage d'un pneumatique (4) sur une jante à base creuse (10) d'une roue de véhicule (16), dans lequel le pneumatique (4) est saisi dans une position de mise à disposition, au niveau de la bande de roulement, à l'aide d'un préhenseur (2) disposé sur un bras articulé (3) d'un robot de manutention (1) mobile dans trois directions, le pneu (4) est amené à la jante (10) maintenue dans un dispositif de serrage (11), et il est enfilé par-dessus un rebord de jante (12) par un mouvement contrôlé du préhenseur (2) tenant le pneumatique (4) avec le premier talon de pneu (6), orienté vers la jante (10), le montage du second talon de pneu (7) étant réalisé à l'aide d'un dispositif de manutention comportant un outil de montage (15), lequel, durant le mouvement du robot de manutention (1), guide l'outil de montage (15) le long d'une trajectoire circulaire sur le rebord de jante (12), de sorte que le second talon de pneu (7) est entièrement enfilé sur le rebord de jante (12), le mouvement du robot de manutention (1) étant coordonné avec celui du dispositif de manutention, et le pneumatique (4) étant maintenu au niveau de sa bande de roulement par le robot de manutention (1) durant tout le processus de montage.

2. Procédé selon la revendication 1, **caractérisé en ce que** le pneumatique est transporté par le robot de manutention (1) dans une station de mouillage (5) pour le mouillage des talons de pneu (6, 7) avec un lubrifiant, et est déplacé dans la station de mouillage (5) avec les talons de pneu (6, 7) le long d'un dispositif d'application (8) du lubrifiant.

3. Procédé selon la revendication 1 ou 2, **caractérisé en ce que,** pour le montage du premier talon de pneu (6), le pneumatique (4) est placé sur la jante (10) par le robot de manutention (1) dans une position inclinée par rapport à la jante (10), dans laquelle l'axe de rotation du pneumatique (4) forme un angle avec l'axe de rotation de la jante (10), de telle sorte qu'une section du rebord de jante (12) pénètre dans l'ouverture du premier talon de pneu (6) et que le talon de pneu (6), dans la zone de cette section du rebord de jante (12), vient en appui en un point du creux (13) de la jante (10), et qu'ensuite, en réduisant l'inclinaison du pneumatique (4) par rapport à la jante (10), le talon de pneu (6) est enfilé sur le rebord de jante (12).

4. Procédé selon la revendication 1 ou 2, **caractérisé en ce que** le montage du premier talon de pneu (6) est effectué à l'aide d'un dispositif de manutention comportant un outil de montage (15) dont le mouvement est coordonné avec celui du robot de manutention (1), de sorte que, durant le mouvement du robot de manutention (1), l'outil de montage (15) est guidé le long d'une trajectoire circulaire sur le rebord de jante (12) et qu'ainsi le premier talon de pneu (6) est entièrement enfilé sur le rebord de jante (12).

5. Procédé selon l'une des revendications précédentes, **caractérisé en ce que** le dispositif d'application (8) comprend un dispositif de brossage en forme de tige, fixe et pouvant être mouillé avec du lubrifiant, et **en ce que** le robot de manutention (1) fait pivoter le pneu (4) autour du dispositif de brossage.

6. Procédé selon l'une des revendications précédentes, **caractérisé en ce que** le pneumatique (4), lors de la réduction de son inclinaison par rapport à la jante (10), est pivoté par le robot de manutention (1) autour du point de contact entre le creux (13) et le talon de pneu (6, 7).

7. Procédé selon l'une des revendications précédentes, **caractérisé en ce que,** lors du montage, le pneumatique (4) est déformé par le robot de manutention (1) ou par le dispositif de manutention, de telle sorte que le talon de pneu (6, 7) à monter prend une forme ovale.

8. Procédé selon l'une des revendications précédentes, **caractérisé en ce qu'**après le montage du pneumatique (4) sur la jante (10), le robot de manutention (1) transfère la roue montée (16) à un dispositif de convoyage qui transporte la roue (16).

9. Dispositif pour la mise en oeuvre du procédé selon l'une des revendications 1 à 8 précédentes, **caractérisé par** un robot de manutention (1) avec un bras articulé (3) mobile dans trois directions, lequel porte à son extrémité libre un préhenseur (2) pour saisir et maintenir des pneumatiques (4), et avec une station de montage (9) comprenant un dispositif de serrage (11) pour le maintien réversible d'une jante (10) et qui comprend un dispositif de manutention avec une tête de montage (14), équipée d'outils de montage (15) pouvant être guidés entre le talon de pneu (6, 7) et le rebord de jante (12) le long de ceux-ci, la station de montage (9) étant disposée dans la zone de travail du robot de manutention (1).

10. Dispositif selon la revendication 9, **caractérisé par** une station de mouillage (5) disposée dans la zone de travail du robot de manutention (1), avec un dispositif d'application (8) pouvant être mouillé avec du lubrifiant, le robot de manutention (1) amenant le pneumatique (4) à mouiller au niveau du dispositif d'application (8).

11. Dispositif selon la revendication 9 ou 10, **caractérisé en ce que** le préhenseur (2) du robot de manutention (1) comprend au moins un élément de retenue qui presse le talon de pneu supérieur (7) du pneu sensiblement au niveau du creux (13) de la jante (12).

12. Dispositif selon l'une des revendications 9 à 11 précédentes, **caractérisé en ce que** le dispositif de manutention et le robot de manutention (1) sont couplés à un dispositif de synchronisation qui synchronise leurs mouvements.
